# FASCICULE DE BREVET EUROPEEN

(11) **EP 3 254 040 B1**
(45) Date de publication et mention de la délivrance du brevet: **03.04.2019**
(21) Numéro de dépôt: 16705297.6
(22) Date de dépôt: 01.02.2016
(51) Int. Cl.: F26B 5/14, B30B 9/04, B30B 9/26, C02F 11/12

(54) **PROCÉDÉ DE GESTION DE FLUX D'AIR D'UNE DÉSHYDRATATION MÉCANIQUE DE BOUES, ET DISPOSITIF S'Y RAPPORTANT**
VERFAHREN ZUR VERWALTUNG VON LUFTSTRÖMEN AUS MECHANISCHER DEHYDRIERUNG VON SCHLAMM UND ZUGEHÖRIGE VORRICHTUNG
METHOD FOR MANAGING AIR STREAMS FROM MECHANICAL DEHYDRATION OF SLUDGE, AND CORRESPONDING DEVICE

(30) Priorité: 02.02.2015 FR 1550785
(43) Date de publication de la demande: 13.12.2017
(73) Titulaire: Suez International, 92040 Paris la Défense Cedex (FR)
(72) Inventeur: PARDO, Pierre Emmanuel, 91400 Orsay (FR); NASTASI, Valérie, 91140 Villejust (FR); JUDENNE, Eric, 92370 Chaville (FR)
(74) Mandataire: IPAZ
(86) Numéro de dépôt international: PCT/IB2016/050500
(87) Numéro de publication internationale: WO 2016/125069

(56) Documents cités:
- WO-A2-00/71222
- BE-A- 635 799
- FR-A- 1 484 558
- FR-A1- 3 005 950

## Description

### Domaine technique

La présente invention se rapporte au domaine de la déshydratation de produits pâteux, aussi appelés dans ce document « produits à déshydrater », en particulier de boues de station d'épuration.

La présente invention concerne plus particulièrement une presse à piston apte à gérer des flux d'air qu'elle génère, ainsi qu'un procédé d'utilisation d'une telle presse.

### Etat de la technique antérieure

On connaît dans l'art antérieur un procédé de déshydratation mécanique nommé « Dehydris™ Twist » permettant de déshydrater des boues de station de traitement d'eau potable ou d'eaux usées, ou de dessalement.

Un tel procédé met en oeuvre une presse à piston comprenant un cylindre et un piston formant une chambre dans laquelle les produits à déshydrater sont pressés lorsque le piston se rapproche du fond du cylindre. Dans cette chambre de pressage, le piston et le fond du cylindre sont avantageusement reliés par des drains souples perméables au liquide et imperméables aux matières solides. Une telle presse à piston permet de réaliser des cycles de déshydratation de produits introduits dans la chambre de pressage. Typiquement, un cycle de déshydratation comprend :
- au moins une opération d'alimentation permettant d'introduire dans la chambre de pressage un produit à déshydrater,
- au moins une opération de pressage permettant d'extraire du produit à déshydrater une partie de l'eau qu'il contient, cette partie d'eau appelée filtrat étant évacuée de la chambre de pressage par les drains,
- au moins une opération de vidange permettant d'évacuer de la chambre de pressage le produit à déshydrater par ouverture du cylindre.

Un inconvénient d'un tel procédé est qu'il génère des odeurs provenant de la manipulation du produit à déshydrater lequel est mis en contact avec des flux d'air pouvant circuler dans l'environnement de la presse à piston ou dans un local abritant cette presse. Dans le cas de boues de station d'épuration, de telles odeurs peuvent être préjudiciables à la santé d'individus se trouvant dans un tel environnement ou un tel local.

En effet, d'une part, le bon fonctionnement d'une telle presse implique de permettre à la chambre de pressage d'être :
- alimentée en air extérieur lorsque, sous l'effet du déplacement du piston ou de l'évacuation de filtrat, le volume de la chambre de pressage non rempli par le produit à déshydrater augmente,
- vidée d'une partie de l'air qu'elle contient lorsque, sous l'effet du déplacement du piston ou de l'alimentation en produit à déshydrater, le volume de la chambre de pressage non rempli par le produit à déshydrater diminue.

Cela est rendu possible, dans l'art antérieur connu, par un évent ou orifice permettant une circulation naturelle d'air entre la chambre de pressage et l'extérieur de la presse à piston.

La circulation naturelle d'air par un tel évent ou orifice se traduit désavantageusement par une émanation d'odeurs lors de l'actionnement du piston, notamment lors d'une opération de pressage pendant laquelle l'air rejeté peut être malodorant et/ou contenir des polluants émis par le produit à déshydrater.

D'autre part, pendant l'opération de vidange, le cylindre est ouvert ouvrant l'espace intérieur de la chambre de pressage vers l'extérieur de la presse et générant ainsi des odeurs dans l'air ambiant autour de la presse.

Dans ces deux cas, la réduction de la propagation des odeurs peut être réalisée par un système d'aspiration dédié, par exemple situé au plafond de la pièce abritant la presse à piston. Un tel système d'aspiration fonctionne typiquement par dilution de l'air vicié et nécessite un volume d'air d'autant plus important que les émissions sont importantes. En général, ce volume d'air vicié est ensuite traité (désodorisation).

Un autre inconvénient d'un tel procédé est que le produit à déshydrater colmate les drains de la presse.

On connait aussi le document FR1484558 qui concerne la mise en oeuvre d'un filtre-presse, selon laquelle pendant la filtration, on reprend au moins de temps en temps une partie de la matière amenée sous pression au filtre-presse, à partir d'un point éloigné du point d'entrée de la matière dans le filtre-presse. Lorsqu'on exécute la filtration de cette façon, la matière à filtrer reste toujours en mouvement dans la région de l'ouverture centrale des plateaux du filtre, ce qui permet de limiter le risque que des impuretés fibreuses s'y accumulent en masse et provoquent des obstructions de l'ouverture centrale des plateaux du filtre.

Toutefois, lorsque le taux d'impuretés fibreuses s'étend au-delà d'un certain seuil, l'agitation de la matière à filtrer ne suffit plus à empêcher l'obstruction des drains.

On connaît aussi le document FR3005950 qui concerne un procédé de déshydratation poussée, par pressage, de résidus salins qui sont introduits dans le cylindre d'une presse à piston comportant des drains souples, la presse fonctionnant par fournée. Lors du pressage, le piston effectue des mouvements d'aller et retour et applique des pressions alternatives et variables sur la boue, tandis que les drains souples se déforment. Le liquide exprimé du produit traversant la paroi des drains et est évacué comme filtrat, tandis que les boues déshydratées demeurent à l'extérieur des drains et sont évacuées par ouverture de la presse.

Toutefois, dans le cas d'impuretés fibreuses de très faibles dimensions, les drains finissent par être obstrués.

La présente invention a pour but de pallier tout ou partie de ces inconvénients et/ou de réduire les débits d'air de ventilation à évacuer et désodoriser et/ou d'optimiser la gestion du traitement des odeurs d'une presse à piston et/ou de minimiser le colmatage des drains.

### Exposé de l'invention

A cet effet, la présente invention propose une presse à piston comprenant une chambre de pressage, la chambre de pressage étant formée par un cylindre et un piston, cette presse à piston étant agencée pour réaliser au moins une opération de pressage, cette opération de pressage comprenant :
- au moins un déplacement du piston suivant un premier sens réduisant le volume de la chambre de pressage,
- au moins un déplacement du piston suivant un deuxième sens, différent du premier sens et de préférence opposé au premier sens, augmentant le volume de la chambre de pressage.

Selon un premier aspect de presse selon l'invention, cette presse à piston comprend de préférence une canalisation reliant la chambre de pressage à une sortie d'air de cette canalisation, cette canalisation étant agencée pour que de l'air circulant dans la canalisation entre la chambre de pressage et ladite sortie d'air se déplace :
- de la chambre de pressage jusqu'à la sortie d'air de la canalisation lorsque le piston se déplace suivant le premier sens,
- vers la chambre de pressage lorsque le piston se déplace suivant le deuxième sens,
la canalisation comprenant :
- au moins une partie mixte agencée pour écouler de l'air et de l'eau en provenance de la chambre de pressage,
- une bifurcation agencée pour séparer l'air et l'eau écoulés à travers l'au moins une partie mixte,
la partie mixte de la canalisation étant située entre la bifurcation et la chambre de pressage.

Une telle canalisation améliore la canalisation des odeurs générées par une telle presse à piston, notamment lors de l'opération de pressage, en particulier lorsque la chambre de pressage comprend un produit à déshydrater du type boue d'eau résiduaire.

Selon une caractéristique avantageuse, la canalisation peut comprendre en outre :
- une branche de circulation d'air reliant la bifurcation et la sortie d'air,
- une branche d'évacuation d'eau reliant la bifurcation et une sortie d'eau de cette branche d'évacuation d'eau.

Selon une autre caractéristique avantageuse, la presse à piston selon l'invention peut comprendre en outre des moyens hydrauliques, de préférence un siphon, agencés pour empêcher une circulation d'air dans la branche d'évacuation d'eau à travers ces moyens hydrauliques.

Selon encore une autre caractéristique avantageuse, la presse à piston selon l'invention peut comprendre en outre des moyens d'introduction d'air, de préférence situés dans la branche de circulation d'air, agencés pour introduire dans la canalisation de l'air provenant de l'extérieur de la chambre de pressage.

De préférence, les moyens d'introduction d'air comprennent un clapet anti-retour.

Avantageusement, la presse à piston selon l'invention peut comprendre en outre des moyens de fermeture de la canalisation agencés pour empêcher toute circulation d'air ou d'eau dans la canalisation à travers ces moyens de fermeture. De préférence, ces moyens de fermeture comprennent une vanne étanche à l'air ou respectivement à l'eau lorsqu'une telle vanne est mise dans un état fermé, et laissant passer de l'air ou respectivement de l'eau lorsqu'elle est mise dans un état ouvert, une telle vanne étant montée dans la branche de circulation d'air ou respectivement d'évacuation d'eau.

De tels moyens de fermeture permettent de contrôler la circulation d'air ou d'eau, et d'améliorer ainsi la canalisation des odeurs générées par une telle presse à piston, par exemple lors de l'opération de pressage.

De préférence, la presse à piston selon l'invention comprend en outre des moyens de commande aptes à piloter les moyens de fermeture de la canalisation.

Selon une autre caractéristique avantageuse, la presse à piston selon l'invention peut comprendre en outre des moyens de ventilation de type ventilateur, situés dans la branche de circulation d'air, aptes à générer un flux d'air de la chambre de pressage jusqu'à la sortie d'air de la canalisation.

Selon encore une autre caractéristique, la bifurcation peut être agencée pour évacuer l'eau vers la branche d'évacuation d'eau par effet de la gravitation sur l'eau de manière à séparer l'eau et l'air.

Selon un deuxième aspect de presse selon l'invention, la presse à piston selon l'invention peut comprendre en outre un système d'injection d'air comportant un réservoir d'air comprimé, ce système d'injection étant de préférence agencé pour injecter un volume (de préférence calibré) d'air comprimé dans une canalisation vers la chambre de pressage, cette canalisation correspondant de préférence à la canalisation selon le premier aspect de l'invention.

En particulier, ce système d'injection d'air peut être situé dans la branche de circulation d'air d'une presse selon le premier aspect de l'invention.

De préférence, le système d'injection d'air est apte à injecter l'air comprimé dans la canalisation de manière furtive, de manière à injecter ledit volume dans la canalisation typiquement en moins de deux secondes.

Un tel système d'injection d'air permet notamment de décolmater les parties de la presse en contact avec le produit à déshydrater et de favoriser ainsi l'aspiration d'air.

L'invention concerne aussi un procédé d'utilisation d'une presse à piston selon différentes combinaisons de caractéristiques décrites ci-dessus, la presse à piston réalisant au moins une opération de pressage, cette opération de pressage comprenant :
- au moins une étape de déplacement du piston suivant le premier sens réduisant le volume de la chambre de pressage,
- au moins une étape de déplacement du piston suivant le deuxième sens augmentant le volume de la chambre de pressage.

Selon un premier aspect de procédé selon l'invention, le procédé comprend de préférence au moins une étape de circulation d'air dans la canalisation entre la chambre de pressage et la sortie d'air au cours de laquelle l'air se déplace :
- de la chambre de pressage jusqu'à la sortie d'air de la canalisation lorsque le piston se déplace suivant le premier sens,
- vers la chambre de pressage lorsque le piston se déplace suivant le deuxième sens,
et, de préférence, il comprend en outre :
- au moins une étape de circulation d'air et d'eau en provenance de la chambre de pressage sur au moins une partie mixte de la canalisation,
- au moins une étape de séparation de l'air et de l'eau écoulés au travers de l'au moins une partie mixte.

Avantageusement, le procédé selon l'invention peut comprendre en outre au moins une étape d'introduction dans la canalisation d'air provenant de l'extérieur de la chambre de pressage.

Selon une caractéristique avantageuse, le procédé selon l'invention peut comprendre en outre au moins une étape de fermeture de la canalisation empêchant toute circulation d'air ou d'eau dans la canalisation à travers les moyens de fermeture d'une presse à piston selon différentes combinaisons de caractéristiques décrites ci-dessus. Typiquement, pour réaliser une telle étape de fermeture, on pilote une vanne montée sur la branche de circulation d'air ou respectivement d'évacuation d'eau.

Selon une autre caractéristique avantageuse, le procédé selon l'invention peut comprendre en outre au moins une étape de génération d'un flux d'air déplaçant de l'air dans la canalisation de la chambre de pressage jusqu'à la sortie d'air, par exemple à l'aide des moyens de ventilation.

De préférence, l'étape de génération comprend une étape de génération d'un flux d'air réalisée pendant que le piston se déplace suivant le premier sens.

Très avantageusement, l'au moins une étape de génération peut comprendre une étape de génération d'un flux d'air, de préférence avec un débit maximal des moyens de ventilation, réalisée pendant au moins une opération de vidange, l'au moins une opération de vidange permettant d'évacuer de la chambre de pressage un produit à déshydrater ayant subi l'au moins une opération de pressage. Ainsi, l'invention permet aussi d'améliorer la canalisation des odeurs générées par une presse à piston selon l'invention lors de l'opération de vidange.

Selon encore une autre caractéristique avantageuse, le débit d'air est de préférence acheminé par les moyens de ventilation et est contrôlé de manière à atteindre un débit calculé en fonction d'un pourcentage de déshydratation estimé d'un produit à déshydrater se trouvant dans la chambre de pressage.

Selon un deuxième aspect de procédé selon l'invention, le procédé selon l'invention peut comprendre au moins une étape d'injection d'un volume d'air comprimé dans une canalisation vers la chambre de pressage, cette canalisation correspondant de préférence à la canalisation selon le premier aspect de l'invention. Typiquement, cette étape d'injection est réalisée avec le système d'injection décrit ci-dessus. Une telle étape d'injection permet notamment de décolmater les parties de la presse en contact avec le produit à déshydrater et de favoriser ainsi l'aspiration d'air.

De préférence, le volume calibré d'air comprimé est calculé en fonction d'un volume estimé d'un produit à déshydrater se trouvant dans la chambre de pressage et d'un pourcentage de déshydratation paramétré dudit produit à déshydrater.

De préférence, l'au moins une étape d'injection comprend une étape d'injection réalisée après l'au moins une opération de pressage et qui précède au moins une opération de vidange, ce qui permet de limiter les phénomènes de collage lors de l'au moins une opération de vidange, l'au moins une opération de vidange permettant d'évacuer de la chambre de pressage un produit à déshydrater ayant subi l'au moins une opération de pressage.

Avantageusement, l'au moins une étape d'injection peut comprendre une étape d'injection réalisée avant la fin de l'au moins une opération de pressage, ce qui permet notamment d'améliorer la siccité finale du produit à déshydrater en le déstructurant.

Selon une caractéristique avantageuse, l'au moins une étape de fermeture peut être réalisée avant l'au moins une étape d'injection.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la FIGURE 1 est une vue schématique d'une presse à piston selon l'invention ;
- les FIGURES 2 à 4 représentent une partie de la presse à piston de la FIGURE 1 dans différents états de fonctionnement d'un cylindre et d'un piston de cette presse :
   ∘ FIGURE 2 : déplacement du piston suivant un premier sens réduisant le volume d'une chambre de pressage formée par le cylindre et le piston,
   ∘ FIGURE 3 : déplacement du piston suivant un deuxième sens augmentant le volume de la chambre de pressage,
   ∘ FIGURE 4 : ouverture du cylindre pour réaliser une opération de vidange ;

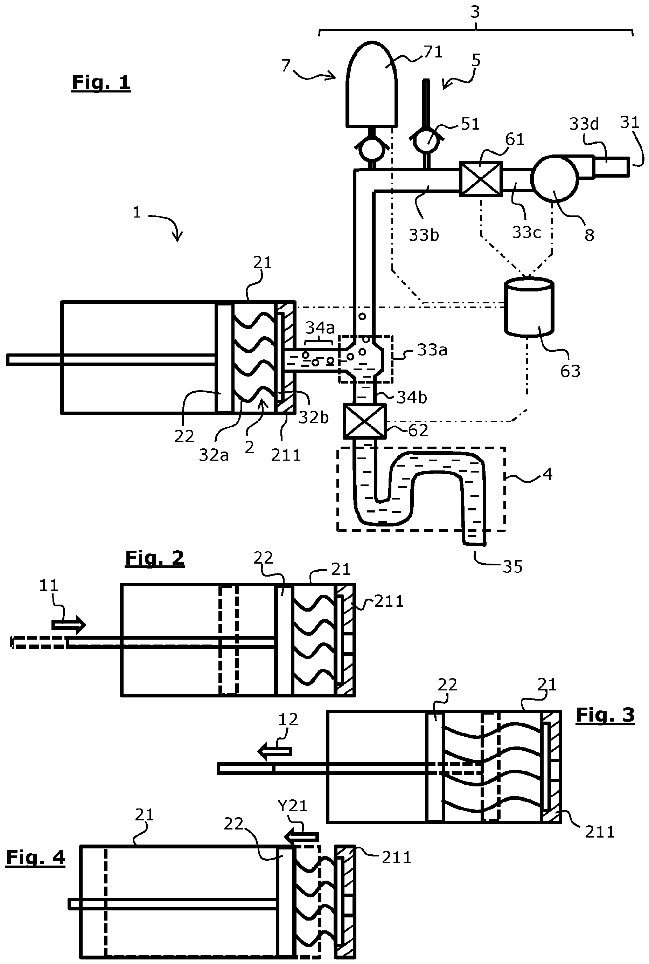

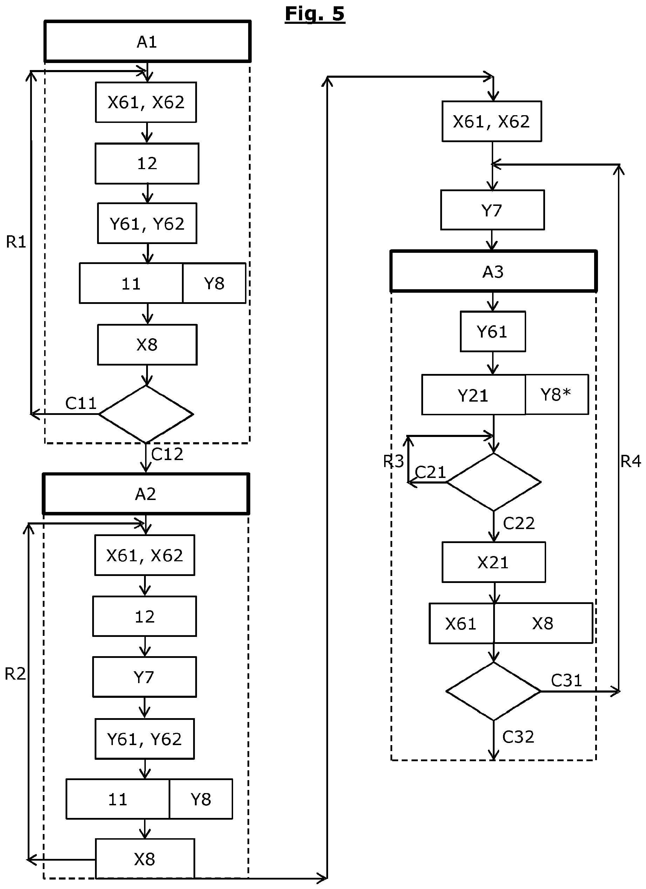

- la FIGURE 5 illustre un procédé d'utilisation mettant en oeuvre la presse à piston de la FIGURE 1.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

La FIGURE 1 illustre un mode de réalisation actuellement préféré de la presse à piston selon l'invention.

Selon ce mode de réalisation, la presse 1 à piston comprend un cylindre 21 et un piston 22 formant une chambre de pressage 2.

Le volume de la chambre de pressage 2 peut varier en fonction de la position du piston 22 par rapport au cylindre 21. Par exemple, lorsque le piston 22 se déplace suivant un premier sens 11, représenté de la gauche vers la droite en FIGURE 2, le volume de la chambre de pressage 2 diminue. Lorsque le piston 22 se déplace suivant un deuxième sens 12, en particulier opposé au premier sens et représenté de la droite vers la gauche en FIGURE 3, le volume de la chambre de pressage 2 augmente.

La presse 1 à piston selon l'invention comprend une canalisation 3 reliant la chambre de pressage 2 à une sortie d'air 31.

Lorsque la presse 1 est abritée dans un local ou un bâtiment (délimité par des murs et des portes), cette sortie d'air 31 débouche en-dehors dudit local ou bâtiment abritant aussi d'éventuels utilisateurs.

Dans ce mode de réalisation, la canalisation 3 comprend :
- des drains 32a (ou gaines) reliant le piston 22 et un fond du cylindre 211 représenté en coupe sur les FIGURES 1 à 4,
- une chambre de récupération 32b réalisée dans un fond du cylindre 211.

Les drains 32a sont souples ou flexibles, afin de résister aux déplacements du piston 22 suivant le premier 11 ou le deuxième 12 sens, le fond du cylindre 211 étant fixe par rapport au cylindre 21. Avantageusement, les drains 32a sont d'un type perméable aux liquides et aux gazs et imperméable aux matières solides. Ainsi, de l'eau ou de l'air peut circuler au travers de ces drains 32a.

La chambre de récupération 32b est reliée à un élément de canalisation appelé partie mixte 34a.

La chambre de récupération 32b et la partie mixte 34a de la canalisation 3 sont agencés de manière à ce que, lorsque la presse 1 à piston réalise une opération de pressage A2 au cours de laquelle le piston 22 est successivement déplacé suivant le premier 11 et le deuxième 12 sens, l'eau et l'air provenant de la chambre de pressage 2 sont dirigés vers la chambre de récupération 32b par les drains 32a puis vers la partie mixte 34a.

La partie mixte 34a est aussi reliée à une bifurcation 33a, la partie mixte 34a étant située entre cette bifurcation 33a et la chambre de récupération 32b.

La bifurcation 33a est agencée pour séparer l'eau et l'air écoulés dans la partie mixte 34a en provenance de la chambre de pressage 2.

Pour réaliser une telle séparation de l'air et de l'eau, la bifurcation 33a comprend de préférence un pot de dégazage. Un tel pot de dégazage est par exemple d'un type dégazeur à plateaux, ou dégazeur à pulvérisation.

Comme illustré en FIGURE 1, la bifurcation 33a est reliée, d'une part, à la partie mixte 34a et, d'autre part, à des éléments de tuyauterie 33b, 34b reliés respectivement à la sortie d'air 31 et à une sortie d'eau 35.

La canalisation 3 comprend ainsi une branche de circulation d'air comportant notamment l'élément de tuyauterie 33b, et une branche d'évacuation d'eau comportant notamment l'élément de tuyauterie 34b.

La branche de circulation d'air comprend plusieurs éléments de tuyauterie 33b, 33c, 33d reliant la bifurcation 33a et la sortie d'air 31.

De préférence, une vanne 61 est montée entre les éléments de tuyauterie 33b et 33c de la branche de circulation d'air. La vanne 61 est d'un type apte à empêcher une circulation d'air dans la canalisation 3 au travers de cette vanne 61 lorsqu'elle est mise dans un état fermé X61, et apte à autoriser une circulation d'air dans la canalisation 3 au travers de cette vanne 61 lorsqu'elle est mise dans un état ouvert Y61.

Lorsque la vanne 61 est dans l'état ouvert Y61, de l'air peut circuler dans la canalisation 3 entre la chambre de pressage 2 et la sortie d'air 31 par les drains 32a, la chambre de récupération 32b, la partie mixte 34a, la bifurcation 33a et les éléments de tuyauterie 33b, 33c, 33d de la branche de circulation d'air de la canalisation 3.

En particulier, lorsque le piston 22 se déplace suivant le premier sens 11 (FIGURE 1), le volume de la chambre de pressage 2 diminue. Une diminution du volume de la chambre de pressage 2 augmente la pression de l'air présente dans la chambre de pressage 2 entraînant une évacuation « naturelle » d'air de la chambre de pressage 2 par la canalisation 3 vers la sortie d'air 31.

Des moyens d'introduction d'air 5 comprenant de préférence un clapet anti-retour 51 sont montés sur la branche de circulation d'air de la canalisation 3 en amont de la vanne 61 sur l'élément de canalisation 33b. Un tel clapet anti-retour 51 permet d'introduire de l'air dans la tuyauterie 33b par ce clapet 51 et d'empêcher l'air de sortir de la canalisation 3 à travers ce clapet 51. De préférence, le clapet anti-retour 51 débouche, sur sa partie de branchement non connectée à la branche de circulation d'air de la canalisation 3, dans un local accueillant la presse 1 à piston (ce local étant rempli d'air ambiant), ou dans l'environnement de la presse à piston.

Il en résulte avantageusement que lorsque le piston 22 se déplace suivant le deuxième sens 12 (FIGURE 2), augmentant ainsi le volume de la chambre de pressage 2 et entraînant une dépression qui génère un appel d'air, de l'air provenant dudit local est naturellement aspiré par le clapet anti-retour 51 et circule jusqu'à la chambre de pressage 2 à travers la branche de circulation d'air de la canalisation 3.

Dans un mode de réalisation très avantageux, un système d'injection d'air 7 est monté sur la canalisation 3, de préférence sur l'élément de tuyauterie 33b de la branche de circulation d'air représenté en FIGURE 1.

Ce système d'injection d'air 7 comprend de préférence un réservoir 71 dans lequel est stocké de l'air comprimé.

De préférence, le système d'injection d'air 7 est agencé pour injecter de l'air comprimé stockée dans le réservoir 71 dans la canalisation 3, et en particulier dans la tuyauterie 33b de la branche de circulation d'air.

Ce système d'injection d'air 7 est de préférence agencé pour pouvoir injecter un volume d'air comprimé dans la canalisation 3 pendant une durée relativement courte, par exemple inférieure à 2 secondes, avec une pression relativement importante, par exemple 6 bars.

De cette façon, lorsque la vanne 61 est mise dans l'état fermé X61, l'air comprimé injecté dans la canalisation 3 circule dans la branche de circulation d'air et les drains 32a jusqu'à la chambre de pressage 2. Très avantageusement, la pression de l'air comprimé injecté est déterminée pour nettoyer les drains 32a, par exemple en raison de leur colmatage par leur contact avec du produit à déshydrater présent dans la chambre de pressage 2, ou pour appliquer une pression sur ce produit à déshydrater favorisant sa déshydratation.

Dans ce cas d'utilisation, le clapet anti-retour 51 est calibré pour supporter une pression de 6 bars.

De préférence, la branche de circulation d'air de la canalisation 3 comprend en outre des moyens de ventilation, par exemple un ventilateur 8 apte à générer un flux d'air de la chambre de pressage 2 jusqu'à la sortie d'air 31 de la canalisation 3, en particulier lorsque la vanne 61 est mise dans l'état ouvert Y61.

Concernant la branche d'évacuation d'eau de la canalisation 3, une vanne 62 est de préférence montée en aval de la bifurcation 33a sur l'élément de tuyauterie 34b de la branche d'évacuation d'eau. La vanne 62 est d'un type apte à empêcher une circulation d'eau dans la canalisation 3 au travers de cette vanne 62 lorsqu'elle est mise dans un état fermé X62, et apte à autoriser une circulation d'eau dans la canalisation 3 au travers de cette vanne 62 lorsqu'elle est mise dans un état ouvert Y62.

Lorsque la vanne 62 est dans l'état ouvert Y62, de l'eau peut circuler dans la canalisation 3 entre la chambre de pressage 2 et la sortie d'eau 35 par les drains 32a, la chambre de récupération 32b, la partie mixte 34a, la bifurcation 33a et l'élément de tuyauterie 34b de la branche d'évacuation d'eau de la canalisation 3.

Avantageusement, la branche d'évacuation d'eau de la canalisation 3 comprend, en aval de la vanne 62, des moyens hydrauliques 4, par exemple un siphon, apte à empêcher une circulation d'air dans cette branche à travers ces moyens hydrauliques 4.

Concernant les vannes 61,62 des branches de circulation d'air et d'évacuation d'eau respectivement, la presse 1 à piston selon l'invention comprend de préférence des moyens de commande 63 aptes à piloter ces vannes 61,62 lors d'étapes d'ouverture ou de fermeture de ces vannes. Ces étapes sont décrites dans la section suivante.

### Procédé d'utilisation

La FIGURE 5 représente un mode d'utilisation préféré de la presse 1 à piston selon une combinaison des caractéristiques qui viennent d'être décrites conforme à la presse représentée en FIGURE 1.

La presse 1 à piston est de préférence agencée pour réaliser les opérations suivantes afin de déshydrater un produit à déshydrater, de préférence de la boue d'eau résiduaire :
- au moins une opération de remplissage et pré-pressage A1 consistant à introduire dans la chambre de pressage 2 de la presse 1 à piston du produit à déshydrater, le remplissage étant réalisé lorsque le piston 22 se déplace suivant le deuxième sens 12, le pré-pressage étant réalisé lorsque le piston 21 se déplace suivant le premier sens 11 ;
- au moins une opération de pressage A2 consistant à déplacer alternativement le piston 22 suivant le deuxième sens 12, et suivant le premier sens 11 afin d'extraire du produit à déshydrater une partie de l'eau qu'il contient ;
- au moins une opération de vidange A3 consistant à évacuer de la chambre de pressage 2 le produit à déshydrater ayant subi au moins une opération de pressage A2 par ouverture Y21 du cylindre 21 (FIGURE 4).

En référence à la FIGURE 5, la presse 1 à piston selon l'invention réalise par exemple un cycle de déshydratation comprenant au moins une opération de remplissage et pré-pressage A1 comportant les étapes suivantes :
- une étape de fermeture X61,X62 des vannes 61,62, puis,
- une étape de déplacement du piston 22 suivant le deuxième sens 12, de manière à augmenter le volume de la chambre de pressage 2 - par exemple depuis la position du piston 22 représenté en pointillés sur la FIGURE 3 jusqu'à la position de ce piston 22 représenté en pointillés sur la FIGURE 2 -, cette étape permettant de remplir, au moins partiellement, la chambre de pressage 2 de produit à déshydrater par l'intermédiaire d'un orifice (non représenté), cet orifice étant par exemple coaxial avec la partie mixte 34a et réalisé dans le fond de cylindre 211, alors que les vannes 61,62 sont fermées X61,X62, puis,
- une étape d'ouverture Y61,Y62 des vannes 61,62, puis,
- une étape de déplacement du piston 22 suivant le premier sens 11, de manière à diminuer le volume de la chambre de pressage 2 - par exemple depuis la position du piston 22 représenté en pointillés sur la FIGURE 2 jusqu'à la position de ce piston 22 représenté en pointillés sur la FIGURE 3 -, cette étape étant réalisée simultanément avec une étape de génération Y8 d'un flux d'air par mise en marche du ventilateur 8, alors que les vannes 61,62 sont ouvertes Y61,Y62, puis,
- une étape d'interruption X8 du flux d'air par arrêt du ventilateur 8, puis,
- si on remplit une condition C11 selon laquelle le produit à déshydrater contenu dans la chambre de pressage 2 ne dépasse pas un volume limite de remplissage de la chambre de pressage 2, par exemple 2/3 du volume de la chambre de pressage 2, utilisant par exemple des moyens de mesure tels que débitmètre ou capteur de concentration, et s'il y a encore du produit à déshydrater disponible pour remplir la chambre de pressage 2, on reprend l'opération de remplissage et pré-pressage A1 à l'étape de fermeture X61,X62 des vannes 61,62 décrite ci-dessus (voir boucle R1 en FIGURE 5),
- si on remplit une condition C12 selon laquelle le produit à déshydrater contenu dans la chambre de pressage 2 atteint le volume limite de remplissage de la chambre de pressage 2, ou s'il n'y a plus de produit à déshydrater disponible pour remplir la chambre de pressage 2, on réalise au moins une opération de pressage A2 comportant les étapes suivantes :
- une étape de fermeture X61,X62 des vannes 61,62, puis,
- une étape de déplacement du piston 22 suivant le deuxième sens 12, alors que les vannes 61,62 sont fermées X61,X62, puis,
- une étape d'injection Y7 d'un volume d'air comprimé dans la canalisation 3 par ouverture d'une vanne du système d'injection 7, l'ouverture de cette vanne libérant de l'air comprimé contenu dans la réservoir 71 et pouvant être pilotée par les moyens de commande 63 ou par d'autres moyens de commande, l'air comprimé ainsi libéré circulant jusqu'à la chambre de pressage 2, le volume d'air comprimé ainsi libéré étant calculé en fonction d'un volume estimé du produit à déshydrater se trouvant dans la chambre de pressage 2 et d'un pourcentage de déshydratation de ce produit estimé à partir du volume de filtrat évacué ou à partir de la position du piston 22, l'air comprimé ainsi injecté permettant de nettoyer les drains 32a et d'augmenter la siccité finale du produit à déshydrater par application d'une pression sur ce produit, alors que les vannes 61,62 sont fermées X61,X62, puis,
- une étape d'ouverture Y61,Y62 des vannes 61,62, puis,
- une étape de déplacement du piston 22 suivant le premier sens 11, alors que les vannes 61,62 sont ouvertes Y61,Y62, cette étape étant réalisée en même temps qu'une étape de génération Y8 d'un flux d'air par mise en marche du ventilateur 8, puis,
- une étape d'interruption X8 du flux d'air par arrêt du ventilateur 8, puis.

L'au moins une opération de pressage A2 peut être répétée à plusieurs reprises, tel que représenté par la boucle R2 (FIGURE 5).

De préférence, après l'au moins une opération de pressage A2 et avant l'au moins une opération de vidange A3, on réalise une étape d'injection Y7 d'un volume d'air comprimé dans la canalisation 3, par exemple par ouverture d'une vanne du système d'injection 7, après avoir fermé X61,X62 les vannes 61,62.

L'au moins une opération de vidange A3 comprend de préférence les étapes suivantes :
- une étape d'ouverture Y61 de la vanne 61, puis,
- une étape d'ouverture Y21 du cylindre 21 (FIGURE 4) permettant d'évacuer de la chambre de pressage 2 du produit à déshydrater qu'elle contient, cette étape étant réalisée simultanément avec une étape de génération Y8* d'un flux d'air par mise en marche du ventilateur 8, le débit du ventilateur 8 étant de préférence maximal afin d'aspirer un maximum d'air vicié (mis en contact avec du produit à déshydrater dans la chambre de pressage 2), alors que la vanne 61 est ouverte Y61, puis,
- si on remplit une condition C21 selon laquelle l'ouverture du cylindre 21 n'est pas maximale, par exemple si la durée écoulée depuis l'initiation de l'étape d'ouverture précédente est inférieure à une durée estimée d'ouverture maximale du cylindre 21 (par exemple via un détecteur de fin de course), on attend qu'une condition C22 soit remplie (voir boucle R3 en FIGURE 5),
- si on remplit la condition C22 selon laquelle l'ouverture du cylindre 21 est maximale, par exemple si ladite durée écoulée atteint ladite durée estimée d'ouverture maximale du cylindre 21, on passe à l'étape suivante :
- une étape de fermeture X21 du cylindre 21, puis,
- une étape de fermeture X61 de la vanne 61, cette étape étant réalisée en même temps qu'une étape d'interruption X8 du flux d'air par arrêt du ventilateur 8, puis,
- si on remplit une condition C31 selon laquelle l'au moins une opération de vidange A3 a été réalisée une seule fois, on refait une opération de vidange A3 en la faisant précéder de l'étape d'injection Y7 (voir boucle R4 en FIGURE 5),
- si on remplit une condition C32 selon laquelle l'au moins une opération de vidange A3 a été réalisée plus d'une fois, l'au moins une opération de vidange A3 est terminée.

Lors de l'au moins une opération de remplissage et pré-pressage A1, et lors de l'au moins une opération de pressage A2, le cylindre 21 est fermé X21.

Une opération de lavage peut être réalisée en réalisant l'au moins une opération de remplissage et pré-pressage A1, de pressage A2 et de vidange A3 et en remplaçant le produit à déshydrater par de l'eau de lavage.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Presse (1) à piston comprenant une chambre de pressage (2), la chambre de pressage (2) étant formée par un cylindre (21) et un piston (22), cette presse (1) à piston étant agencée pour réaliser au moins une opération de pressage (A2), cette opération de pressage (A2) comprenant :
- au moins un déplacement du piston suivant un premier sens (11) réduisant le volume de la chambre de pressage (2),
- au moins un déplacement du piston suivant un deuxième sens (12) augmentant le volume de la chambre de pressage (2),
cette presse (1) à piston comprenant une canalisation (3) reliant la chambre de pressage (2) à une sortie d'air (31) de cette canalisation (3), cette canalisation (3) étant agencée pour que de l'air circulant dans la canalisation (3) entre la chambre de pressage (2) et ladite sortie d'air (31) se déplace :
- de la chambre de pressage (2) jusqu'à la sortie d'air (31) de la canalisation (3) lorsque le piston (22) se déplace suivant le premier sens (11),
- vers la chambre de pressage (2) lorsque le piston (22) se déplace suivant le deuxième sens (12),
la canalisation (3) comprenant :
- au moins une partie mixte (34a) agencée pour écouler de l'air et de l'eau en provenance de la chambre de pressage (2),
- une bifurcation (33a) agencée pour séparer l'air et l'eau écoulés à travers l'au moins une partie mixte (34a),
la partie mixte (34a) de la canalisation (3) étant située entre la bifurcation (33a) et la chambre de pressage (2),
**caractérisée en ce que** la presse (1) à piston comprend en outre des moyens de fermeture (61, 62) de la canalisation (3) agencés pour empêcher toute circulation d'air ou d'eau dans la canalisation (3) à travers ces moyens de fermeture (61, 62).

2. Presse (1) à piston selon la revendication 1, **caractérisée en ce que** la canalisation (3) comprend en outre :
- une branche de circulation d'air (33b, 33c, 33d) reliant la bifurcation (33a) et la sortie d'air (31),
- une branche d'évacuation d'eau (34b) reliant la bifurcation (33a) et une sortie d'eau (35) de cette branche d'évacuation d'eau (34b).

3. Presse (1) à piston selon la revendication 2, **caractérisée en ce qu'**elle comprend en outre des moyens hydrauliques (4) agencés pour empêcher une circulation d'air dans la branche d'évacuation d'eau (34b) à travers ces moyens hydrauliques (4).

4. Presse (1) à piston selon l'une des revendications précédentes, **caractérisée en ce qu'**elle comprend en outre des moyens d'introduction d'air (5) agencés pour introduire dans la canalisation (3) de l'air provenant de l'extérieur de la chambre de pressage (2).

5. Presse (1) à piston selon la revendication 4, **caractérisée en ce que** les moyens d'introduction d'air (5) comprennent un clapet anti-retour (51).

6. Presse (1) à piston selon l'une des revendications précédentes, **caractérisée en ce qu'**elle comprend en outre des moyens de commande (63) aptes à piloter les moyens de fermeture (61, 62) de la canalisation (3).

7. Presse (1) à piston selon l'une des revendications précédentes, **caractérisée en ce qu'**elle comprend en outre des moyens de ventilation (8) aptes à générer un flux d'air de la chambre de pressage (2) jusqu'à la sortie d'air (31) de la canalisation (3).

8. Presse (1) à piston selon l'une des revendications précédentes, **caractérisée en ce que** la bifurcation est agencée pour évacuer l'eau par effet de la gravitation sur l'eau de manière à séparer l'eau et l'air.

9. Presse (1) à piston selon l'une des revendications précédentes, **caractérisée en ce qu'**elle comprend en outre un système d'injection d'air (7) comportant un réservoir (71) d'air comprimé, ce système d'injection (7) étant agencé pour injecter un volume d'air comprimé dans la canalisation (3) vers la chambre de pressage (2).

10. Procédé d'utilisation d'une presse (1) à piston selon l'une des revendications précédentes, la presse (1) à piston réalisant au moins une opération de pressage (A2), cette opération de pressage (A2) comprenant :
- au moins une étape de déplacement du piston (22) suivant le premier sens (11) réduisant le volume de la chambre de pressage (2),
- au moins une étape de déplacement du piston (22) suivant le deuxième sens (12) augmentant le volume de la chambre de pressage (2),
ce procédé comprenant au moins une étape de circulation d'air dans la canalisation (3) entre la chambre de pressage (2) et la sortie d'air (31) au cours de laquelle l'air se déplace :
- de la chambre de pressage (2) jusqu'à la sortie d'air (31) de la canalisation (3) lorsque le piston (22) se déplace suivant le premier sens (11),
- vers la chambre de pressage (2) lorsque le piston (22) se déplace suivant le deuxième sens (12),
et comprenant en outre :
- au moins une étape de circulation d'air et d'eau en provenance de la chambre de pressage (2) sur au moins une partie mixte (34a) de la canalisation (3),
- au moins une étape de séparation de l'air et de l'eau écoulés au travers de l'au moins une partie mixte (34a),
- au moins une étape de fermeture (X61, X62) de la canalisation (3) empêchant toute circulation d'air ou d'eau dans la canalisation (3) à travers les moyens de fermeture (61, 62) de la presse (1) à piston.

11. Procédé selon la revendication 10, **caractérisé en ce qu'**il comprend en outre au moins une étape d'introduction dans la canalisation (3) d'air provenant de l'extérieur de la chambre de pressage (2).

12. Procédé d'utilisation selon la revendication 10 ou 11, **caractérisé en ce qu'**il comprend au moins une étape d'injection (Y7) d'un volume d'air comprimé dans la canalisation (3) vers la chambre de pressage (2).

13. Procédé selon la revendication 12, **caractérisé en ce que** le volume calibré d'air comprimé est calculé en fonction d'un volume estimé d'un produit à déshydrater se trouvant dans la chambre de pressage (2) et d'un pourcentage de déshydratation paramétré dudit produit à déshydrater.

14. Procédé selon la revendication 12 ou 13, **caractérisé en ce que** l'au moins une étape d'injection (Y7) comprend une étape d'injection réalisée après l'au moins une opération de pressage (A2) et qui précède au moins une opération de vidange (A3), l'au moins une opération de vidange (A3) permettant d'évacuer de la chambre de pressage (2) un produit à déshydrater ayant subi l'au moins une opération de pressage (A2).

15. Procédé selon l'une des revendications 12 à 14, **caractérisé en ce que** l'au moins une étape d'injection (Y7) comprend une étape d'injection réalisée avant la fin de l'au moins une opération de pressage (A2).

16. Procédé selon l'une des revendications 12 à 15, **caractérisé en ce que** l'au moins une étape de fermeture (X61, X62) est réalisée avant l'au moins une étape d'injection (Y7).

17. Procédé selon l'une des revendications 10 à 16, **caractérisé en ce qu'**il comprend en outre au moins une étape de génération (Y8, Y8*) d'un flux d'air déplaçant de l'air dans la canalisation (3) de la chambre de pressage (2) jusqu'à la sortie d'air (31).

18. Procédé selon la revendication 17, **caractérisé en ce que** l'étape de génération comprend une étape de génération (Y8) d'un flux d'air réalisée pendant que le piston (22) se déplace suivant le premier sens (11).

19. Procédé selon la revendication 17 ou 18, **caractérisé en ce que** l'au moins une étape de génération comprend une étape de génération (Y8*) d'un flux d'air réalisée pendant au moins une opération de vidange (A3), l'au moins une opération de vidange (A3) permettant d'évacuer de la chambre de pressage (2) un produit à déshydrater ayant subi l'au moins une opération de pressage (A2).

20. Procédé selon l'une des revendications 17 à 19, **caractérisé en ce que** le débit d'air est acheminé par les moyens de ventilation (8) d'une presse (1) à piston selon la revendication 9 et est contrôlé de manière à atteindre un débit calculé en fonction d'un pourcentage de déshydratation estimé d'un produit à déshydrater se trouvant dans la chambre de pressage (2).

## Patentansprüche

1. Kolbenpresse (1) mit einer Presskammer (2), wobei die Presskammer (2) durch einen Zylinder (21) und einen Kolben (22) gebildet wird, wobei diese Kolbenpresse (1) so angeordnet ist, dass sie wenigstens einen Pressvorgang (A2) durchführt, wobei dieser Pressvorgang (A2) folgende Schritte umfasst:
- wenigstens eine Bewegung des Kolbens in einer ersten Richtung (11), durch die das Volumen der Presskammer (2) verringert wird,
- wenigstens eine Bewegung des Kolbens in einer zweiten Richtung (12), durch die das Volumen der Presskammer (2) vergrößert wird,
wobei diese Kolbenpresse (1) eine Rohrleitung (3) umfasst, die die Presskammer (2) mit einem Luftauslass (31) dieser Rohrleitung (3) verbindet, wobei diese Rohrleitung (3) so angeordnet ist, dass die in der Rohrleitung (3) zwischen der Presskammer (2) und dem Luftauslass (31) zirkulierende Luft sich:
- von der Presskammer (2) zum Luftauslass (31) der Rohrleitung (3) bewegt, wenn der Kolben (22) sich in der ersten Richtung (11) bewegt,
- zur Presskammer (2) bewegt, wenn der Kolben (22) sich in der zweiten Richtung (12) bewegt,
wobei die Rohrleitung (3) Folgendes umfasst:
- wenigstens einen Mischabschnitt (34a), der so angeordnet ist, dass Luft und Wasser aus der Presskammer (2) strömen können,
- eine Gabelung (33a), die so angeordnet ist, dass die Luft und das Wasser, die durch den wenigstens einen Mischabschnitt (34a) geströmt sind, voneinander getrennt werden,
wobei der Mischabschnitt (34a) der Rohrleitung (3) sich zwischen der Gabelung (33a) und der Presskammer (2) befindet,
**dadurch gekennzeichnet, dass** die Kolbenpresse (1) weiterhin Mittel zum Schließen (61, 62) der Rohrleitung (3) umfasst, die so angeordnet sind, dass jegliche Luft- oder Wasserzirkulation in der Rohrleitung (3) durch die Mittel zum Schließen (61, 62) verhindert wird.

2. Kolbenpresse (1) gemäss Anspruch 1, **dadurch gekennzeichnet, dass** die Rohrleitung (3) weiterhin Folgendes umfasst:
- einen Luftzirkulationszweig (33b, 33c, 33d), der die Gabelung (33a) mit dem Luftauslass (31) verbindet,
- einen Wasserablaufzweig (34b), der die Gabelung (33a) mit einem Wasserauslass (35) dieses Wasserablaufzweigs (34b) verbindet.

3. Kolbenpresse (1) gemäss Anspruch 2, **dadurch gekennzeichnet, dass** sie weiterhin hydraulische Mittel (4) umfasst, die so angeordnet sind, dass eine Luftzirkulation in dem Wasserablaufzweig (34b) durch diese hydraulischen Mittel (4) verhindert wird.

4. Kolbenpresse (1) gemäss einem der vorhergehenden Ansprüche, **dadurch gekennzeichnet, dass** sie weiterhin Lufteinleitungsmittel (5) umfasst, die so angeordnet sind, dass Luft von außerhalb der Presskammer (2) in die Rohrleitung (3) eingeleitet wird.

5. Kolbenpresse (1) gemäss Anspruch 4, **dadurch gekennzeichnet, dass** die Lufteinleitungsmittel (5) ein Rückschlagventil (51) umfassen.

6. Kolbenpresse (1) gemäss einem der vorhergehenden Ansprüche, **dadurch gekennzeichnet, dass** sie weiterhin Steuermittel (63) umfasst, die zur Steuerung der Mittel zum Schließen (61, 62) der Rohrleitung (3) geeignet sind.

7. Kolbenpresse (1) gemäss einem der vorhergehenden Ansprüche, **dadurch gekennzeichnet, dass** sie weiterhin Belüftungsmittel (8) umfasst, die zur Erzeugung eines Luftstroms von der Presskammer (2) zum Luftauslass (31) der Rohrleitung (3) geeignet sind.

8. Kolbenpresse (1) gemäss einem der vorhergehenden Ansprüche, **dadurch gekennzeichnet, dass** die Gabelung so angeordnet ist, dass das Wasser unter dem Einfluss der Schwerkraft auf das Wasser abläuft, so dass das Wasser und die Luft voneinander getrennt werden.

9. Kolbenpresse (1) gemäss einem der vorhergehenden Ansprüche, **dadurch gekennzeichnet, dass** sie weiterhin ein Lufteinspritzsystem (7) mit einem Druckluftspeicher (71) umfasst, wobei dieses Einspritzsystem (7) so angeordnet ist, dass ein Druckluftvolumen in der Rohrleitung (3) in die Presskammer (2) eingespritzt wird.

10. Verfahren zur Verwendung einer Kolbenpresse (1) gemäss einem der vorhergehenden Ansprüche, wobei die Kolbenpresse (1) wenigstens einen Pressvorgang (A2) durchführt, wobei dieser Pressvorgang (A2) die folgenden Schritte umfasst:
- wenigstens einen Schritt zur Bewegung des Kolbens (22) in der ersten Richtung (11), bei dem das Volumen der Presskammer (2) verringert wird,
- wenigstens einen Schritt zur Bewegung des Kolbens (22) in der zweiten Richtung (12), bei dem das Volumen der Presskammer (2) vergrößert wird,
wobei dieses Verfahren wenigstens einen Schritt der Luftzirkulation in der Rohrleitung (3) zwischen der Presskammer (2) und dem Luftauslass (31) umfasst, bei dem die Luft sich:
- von der Presskammer (2) zum Luftauslass (31) der Rohrleitung (3) bewegt, wenn der Kolben (22) sich in der ersten Richtung (11) bewegt,
- zur Presskammer (2) bewegt, wenn der Kolben (22) sich in der zweiten Richtung (12) bewegt,
und weiterhin folgende Schritte umfasst:
- wenigstens einen Schritt der Luft- und Wasserzirkulation aus der Presskammer (2) in wenigstens einem Mischabschnitt (34a) der Rohrleitung (3),
- wenigstens einen Schritt der Trennung der Luft und des Wassers, die durch den wenigstens einen Mischabschnitt (34a) geströmt sind,
- wenigstens einen Schritt des Schließens (X61, X62) der Rohrleitung (3), durch den jegliche Luft- oder Wasserzirkulation in der Rohrleitung (3) durch die Mittel zum Schließen (61, 62) der Kolbenpresse (1) verhindert wird.

11. Verfahren gemäss Anspruch 10, **dadurch gekennzeichnet, dass** es weiterhin wenigstens einen Schritt der Einleitung von Luft von außerhalb der Presskammer (2) in die Rohrleitung (3) umfasst.

12. Verfahren zur Verwendung gemäss Anspruch 10 oder 11, **dadurch gekennzeichnet, dass** es wenigstens einen Schritt des Einspritzens (Y7) eines in der Rohrleitung (3) befindlichen Druckluftvolumens in die Presskammer (2) umfasst.

13. Verfahren gemäss Anspruch 12, **dadurch gekennzeichnet, dass** das kalibrierte Druckluftvolumen entsprechend eines geschätzten Volumens eines zu entwässernden Produktes in der Presskammer (2) und eines für das zu entwässernde Produkt festgelegten Entwässerungsprozentsatzes berechnet wird.

14. Verfahren gemäss Anspruch 12 oder 13, **dadurch gekennzeichnet, dass** der wenigstens eine Schritt der Einspritzung (Y7) einen Schritt der Einspritzung umfasst, der nach dem wenigstens einen Pressvorgang (A2) und vor wenigstens einem Entleerungsschritt (A3) durchgeführt wird, wobei durch den wenigstens einen Entleerungsschritt (A3) ein zu entwässerndes Produkt, das dem wenigstens einen Pressvorgang (A2) unterzogen wurde, aus der Presskammer (2) abgeführt werden kann.

15. Verfahren gemäss einem der Ansprüche 12 bis 14, **dadurch gekennzeichnet, dass** der wenigstens eine Schritt der Einspritzung (Y7) einen Schritt der Einspritzung umfasst, der vor dem Ende des wenigstens eines Pressvorgangs (A2) durchgeführt wird.

16. Verfahren gemäss einem der Ansprüche 12 bis 15, **dadurch gekennzeichnet, dass** der wenigstens eine Schritt des Schließens (X61, X62) vor dem wenigstens einen Schritt der Einspritzung (Y7) durchgeführt wird.

17. Verfahren gemäss einem der Ansprüche 10 bis 16, **dadurch gekennzeichnet, dass** es weiterhin wenigstens einen Schritt der Erzeugung (Y8, Y8*) eines Luftstroms umfasst, der die Luft in der Rohrleitung (3) von der Presskammer (2) zum Luftauslass (31) bewegt.

18. Verfahren gemäss Anspruch 17, **dadurch gekennzeichnet, dass** der Schritt der Erzeugung einen Schritt der Erzeugung (Y8) eines Luftstroms umfasst, der durchgeführt wird, während sich der Kolben (22) in der ersten Richtung (11) bewegt.

19. Verfahren gemäss Anspruch 17 oder 18, **dadurch gekennzeichnet, dass** der wenigstens eine Schritt der Erzeugung einen Schritt der Erzeugung (Y8*) eines Luftstroms umfasst, der während wenigstens einem Entleerungsschritt (A3) durchgeführt wird, wobei durch den wenigstens einen Entleerungsschritt (A3) ein zu entwässerndes Produkt, das dem wenigstens einen Pressvorgang (A2) unterzogen wurde, aus der Presskammer (2) abgeführt werden kann.

20. Verfahren gemäss einem der Ansprüche 17 bis 19, **dadurch gekennzeichnet, dass** der Luftstrom durch die Belüftungsmittel (8) einer Kolbenpresse (1) gemäss Anspruch 9 befördert wird und so gesteuert wird, dass er eine Durchflussmenge erreicht, die entsprechend eines geschätzten Entwässerungsprozentsatzes eines zu entwässernden Produktes in der Presskammer (2) berechnet wird.

## Claims

1. A piston press (1) comprising a pressing chamber (2), the pressing chamber (2) being formed by a cylinder (21) and a piston (22), this piston press (1) being arranged in order to carry out at least one pressing operation (A2), this pressing operation (A2) comprising:
- at least one displacement of the piston in a first direction (11) that reduces the volume of the pressing chamber (2),
- at least one displacement of the piston in a second direction (12) that increases the volume of the pressing chamber (2),
this piston press (1) comprising a pipe (3) connecting the pressing chamber (2) to an air outlet (31) of this pipe (3), this pipe (3) being arranged so that air circulating in the pipe (3) between the pressing chamber (2) and said air outlet (31) is displaced:
- from the pressing chamber (2) to the air outlet (31) of the pipe (3) when the piston (22) is displaced in the first direction (11),
- to the pressing chamber (2) when the piston (22) is displaced in the second direction (12),
the pipe (3) comprising:
- at least one mixed part (34a) arranged to move air and water originating from the pressing chamber (2),
- a bifurcation (33a) arranged in order to separate the air and the water moved through the at least one mixed part (34a),
the mixed part (34a) of the pipe (3) being located between the bifurcation (33a) and the pressing chamber (2), **characterized in that** the piston press (1) additionally comprises closure means (61, 62) for closing the pipe (3) that are arranged in order to prevent any circulation of air or water in the pipe (3) through these closure means (61, 62).

2. The piston press (1) as claimed in claim 1, **characterized in that** the pipe (3) additionally comprises:
- an air circulation branch (33b, 33c, 33d) connecting the bifurcation (33a) and the air outlet (31),
- a water discharge branch (34b) connecting the bifurcation (33a) and a water outlet (35) of this water discharge branch (34b).

3. The piston press (1) as claimed in claim 2, **characterized in that** it additionally comprises hydraulic means (4) arranged in order to prevent circulation of air, in the water discharge branch (34b), through these hydraulic means (4).

4. The piston press (1) as claimed in one of the preceding claims, **characterized in that** it additionally comprises air introduction means (5) that are arranged in order to introduce, into the pipe (3), air originating from outside the pressing chamber (2).

5. The piston press (1) as claimed in claim 4, **characterized in that** the air introduction means (5) comprise a non-return valve (51).

6. The piston press (1) as claimed in one of the preceding claims, **characterized in that** it additionally comprises control means (63) suitable for governing the closure means (61, 62) of the pipe (3).

7. The piston press (1) as claimed in one of the preceding claims, **characterized in that** it additionally comprises ventilation means (8) suitable for generating an airflow from the pressing chamber (2) to the air outlet (31) of the pipe (3).

8. The piston press (1) as claimed in one of the preceding claims, **characterized in that** the bifurcation is arranged in order to discharge the water by the effect of gravity on the water so as to separate the water and the air.

9. The piston press (1) as claimed in one of the preceding claims, **characterized in that** it additionally comprises an air injection system (7) comprising a compressed air tank (71), this injection system (7) being arranged in order to inject a volume of compressed air into the pipe (3) toward the pressing chamber (2).

10. A process for using a piston press (1) as claimed in one of the preceding claims, the piston press (1) carrying out at least one pressing operation (A2), this pressing operation (A2) comprising:
- at least one step of displacing the piston (22) in the first direction (11) that reduces the volume of the pressing chamber (2),
- at least one step of displacing the piston (22) in the second direction (12) that increases the volume of the pressing chamber (2),
this process comprising at least one step of circulating air in the pipe (3) between the pressing chamber (2) and the air outlet (31) during which the air is displaced:
- from the pressing chamber (2) to the air outlet (31) of the pipe (3) when the piston (22) is displaced in the first direction (11),
- to the pressing chamber (2) when the piston (22) is displaced in the second direction (12),
and additionally comprising:
- at least one step of circulating air and water originating from the pressing chamber (2) to at least one mixed part (34a) of the pipe (3),
- at least one step of separating the air and the water moved through the at least one mixed part (34a),
**characterized in that** it additionally comprises at least one step (X61, X62) of closing the pipe (3) preventing any circulation of air or water in the pipe (3) through the closure means (61, 62) of the piston press (1).

11. The process as claimed in claim 10, **characterized in that** it additionally comprises at least one step of introducing, into the pipe (3), air originating from outside the pressing chamber (2).

12. The usage process as claimed in claim 10 or 11, **characterized in that** it comprises at least one step (Y7) of injecting a volume of compressed air into the pipe (3) toward the pressing chamber (2).

13. The process as claimed in claim 12, **characterized in that** the calibrated volume of compressed air is calculated as a function of an estimated volume of a product to be dewatered that is in the pressing chamber (2) and of a set dewatering percentage of said product to be dewatered.

14. The process as claimed in claim 12 or 13, **characterized in that** the at least one injection step (Y7) comprises an injection step carried out after the at least one pressing operation (A2) and that precedes at least one emptying operation (A3), the at least one emptying operation (A3) making it possible to discharge from the pressing chamber (2) a product to be dewatered that has undergone the at least one pressing operation (A2) .

15. The process as claimed in one of claims 12 to 14, **characterized in that** the at least one injection step (Y7) comprises an injection step carried out before the end of the at least one pressing operation (A2).

16. The process as claimed in one of claims 12 to 15, **characterized in that** the at least one closure step (X61, X62) is carried out before the at least one injection step (Y7).

17. The process as claimed in one of claims 10 to 16, **characterized in that** it additionally comprises at least one step (Y8, Y8*) of generating an airflow that displaces air in the pipe (3) from the pressing chamber (2) to the air outlet (31).

18. The process as claimed in claim 17, **characterized in that** the generating step comprises a step (Y8) of generating an airflow produced while the piston (22) is displaced in the first direction (11).

19. The process as claimed in claim 17 or 18, **characterized in that** the at least one generating step comprises a step (Y8*) of generating an airflow produced during at least one emptying operation (A3), the at least one emptying operation (A3) making it possible to discharge, from the pressing chamber (2), a product to be dewatered that has undergone the at least one pressing operation (A2) .

20. The process as claimed in one of claims 17 to 19, **characterized in that** the flow of air is transported by the ventilation means (8) from a piston press (1) as claimed in claim 9 and is controlled so as to achieve a flow calculated as a function of an estimated dewatering percentage of a product to be dewatered that is in the pressing chamber (2).
